# EUROPEAN PATENT SPECIFICATION

(11) **EP 0 406 184 B1**
(45) Date of publication and mention of the grant of the patent: **08.12.1993**
(21) Application number: 90830294.6
(22) Date of filing: 27.06.1990
(51) Int. Cl.: B27G 13/04

(54) **Dynamically clamped planing tool and a method for its manufacture**
Dynamisch eingespanntes Hobelwerkzeug und Verfahren zu seiner Herstellung
Serrage dynamique d'un outil de rabotage et procédé pour sa fabrication

(30) Priority: 30.06.1989 IT 353589
(43) Date of publication of application: 02.01.1991
(73) Proprietor: SCM S.p.A., I-47037 Rimini (Forlî) (IT)
(72) Inventor: Gemmani, Giuseppe, I-47037 Rimini (Forli) (IT)
(74) Representative: Lanzoni, Luciano

(56) References cited:
- DE-A- 1 803 817
- DE-C- 915 265
- FR-A- 766 802
- US-A- 1 490 745
- US-A- 4 610 285

## Description

The present invention concerns a dynamically clamped planing tool and a method for its manufacture.

In the woodworking machinery sector and in particular in the sector manufacturing planers there are many known designs regarding the tool shaft and the location of cutting knives on the tool shaft itself.

One of the most established designs, the cutting knife insert type, uses as a cutting tool a series of cutting knives inserted and fixed in longitudinal seats or grooves, distributed around the circumference of a rotating shaft, having a wedge-shaped profile with the apex towards the outside of the circumference. Each cutting knife is inserted in its respective groove and held in place by means of clamping wedges which are held to the shaft by screws. On the shaft, close to each of the cutting knives, there is a recess for chip removal (it is also possible, however, to make this recess in the cutting knife clamping wedge).

A second, improved version of the above design involves the insertion between the cutting knife and the clamping wedge of a third element, fixed on one side by screws, inside the groove in contact with the cutting knife and the clamping wedge; on designs with this third element, the wedge, with its related chip removal recess, is held in place without the aid of screws, since the cutting knife is clamped in position by the thrust of the wedge caused by the centrifugal force generated by the angular velocity of the shaft on the third element whose elastic compliance in turn clamps the cutting knife against the wall of the groove.

Another known design in this field is that described in US Patent - 4.610.285 where the rotating shaft is not a single solid part but rather a series of laminations joined together in a pack to form the shaft for holding the cutting knives.

Each lamination is manufactured by shearing and is profiled with a series of recesses which grow narrower towards the outside, each one having, on its lateral wall, a tooth which, when the pack is put together, constitutes a longitudinal projection which guides and holds in place the cutting knife which is of a matching shape for this purpose. In this case also the clamping element of the knife is a simple wedge which, as a consequence of the centrifugal force generated by the angular velocity of the shaft, is pushed outwards so as to clamp and lock the knife against one wall of the seat so that it cannot be released and remains centered.

Furthermore the dimensions of the wedge are such that, even if the corresponding single knife is absent, the said wedge will not come out of its seat under the action of centrifugal force.

The designs described above however suffer from drawbacks of both a practical and a technical nature: the first design illustrated is clearly not a practical one, because every time a knife has to be changed it is necessary to unscrew the clamping screws, change the knife and replace the screws, all operations which call for a considerable amount of time and, above all, lead to a lack of precision in the positioning of each single cutter. The second design is an improvement on the previous one but it has economic drawbacks, since twice as many elements are used for each knife and the manufacturing processes are much more complicated, so consequently the cost of the planing tool is too high compared with normal market prices. The third design reduces further the drawbacks described above (the knife is clamped into place without using screws and using only one wedge element), but has technical drawbacks, since the shaft made with the pack of laminations is not of a mechanically exact design; this is the fault of the actual laminations themselves which inevitably have, on their perimeters, burrs which reduce the precision with which the knives can be positioned and thus cause a reduction in the final cutting effect. Furthermore the above-mentioned burrs make changing the knives difficult.

The aim of this invention is therefore to eliminate the drawbacks mentioned above by making a planing tool with a shaft made of a single solid part with a device for rapidly and accurately clamping and positioning the cutting knife and which does not require clamping screws.

The invention, as it is characterised in the claims, overcomes the drawbacks mentioned above with a planing tool having a series of cutting knives each having a longitudinal tooth engaging with a corresponding recess in the lateral wall of each longitudinal seat on a shaft and designed to allow a cutting knife to be positioned inside the same seat, and corresponding wedges having each one a tapered profile with an angle less than the opening angle of the seat so as to clamp the cutting knife in a working position, against the lateral wall under the action of a force, directed towards the outside of the shaft, due to the rotation of the latter. The seats furthermore are made using a method which envisages three different passes with two different tools, the first of which is used in the first two passes in which it is off-centre with respect to the axis of the shaft and it also makes a recess which reproduces the external profile of the cutting knife and respectively in which it is angled with respect to the axis of the shaft, the second tool makes the third pass and is at an angle with respect to the axis of the shaft and makes the recess of the lateral wall.

One advantage deriving from this invention consists essentially of the fact that the planing tool made in this manner allows the operator easily and comfortably to insert and then to position the different knives within their seats, thanks to the tooth on each knife; furthermore the knives are not clamped into place by means of inconvenient operations of fastening and unfastening screws, but by means of wedges which push against the tool while the shaft is rotating. These two factors allow the user of the planing tool to do highly accurate woodworking and also prolong the life of the cutting knife (which in any case can be reversed).

The invention is explained below in greater detail in a form which represents an unlimited example thereof with the aid of drawings in which:
- Figure 1 is a cross-section showing the planing tool which is the object of this invention;
- Figure 2 shows a detailed view of the same invention;
- Figures 3a, 3b and 3c are side views of the operations necessary to make a seat in the planing tool in Figure 1, starting from a cylindrical element.

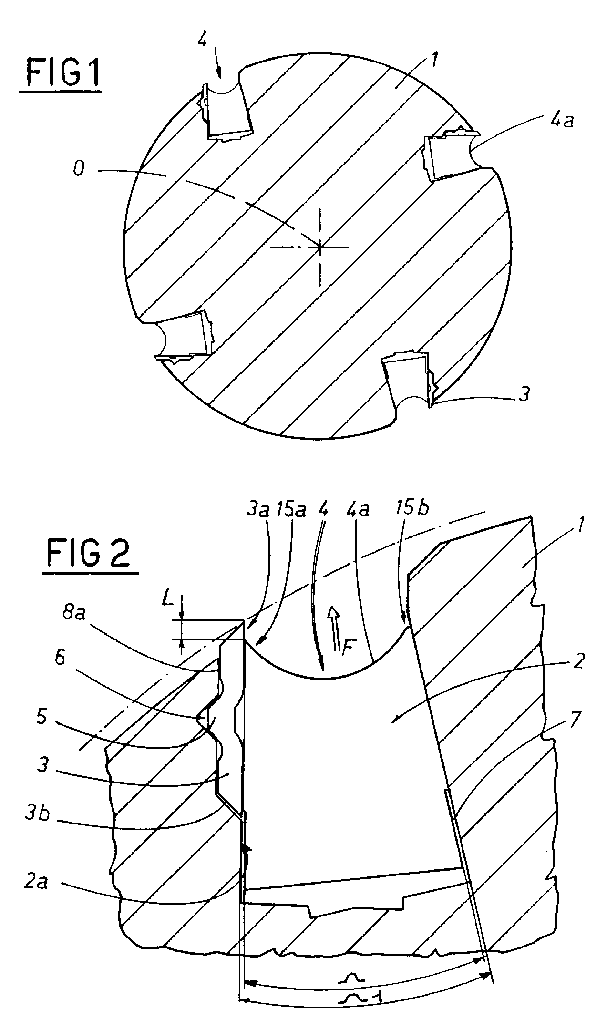

In accordance with the enclosed drawings, the planing tool concerned is of a type consisting essentially of a one-piece cylindrical shaft, indicated by 1 in the drawings, rotating on its own longitudinal axis 0 and having a number of longitudinal seats 2 on its perimeter tapering towards the outside. Each of these seats houses corresponding interchangeable cutting knives 3 which in the example shown, are provided with a pair of cutting edges 3a and 3b at their ends; these knives 3 are in contact with a lateral wall of the longitudinal seat 2, indicated by 2a and with corresponding wedges 4 for clamping the cutting knives 3 inside the seats themselves. These wedges 4 have, each one at its own end facing the outside of the said cylindrical shaft 1, a longitudinal seat 4a for chip removal. As an example, in Figure 1 is shown a planing tool with four seats at 90° on the shaft 1, but the invention presented here can be used and put into practice on any sort of shaft having either more or less seats. As can be seen in Figure 2, every cutting knife 3 is provided with a tooth 5, approximately at its centre, which engages with a matching recess indicated by 6 in Figure 2, made on the lateral wall 2a of the seat 2, which allows the same cutting knife 3 to be positioned and centered, with respect to the shaft 1, accurately within the seat 2; this positioning on the lateral wall is further improved by making a recess (indicated by 8 in Fig. 2) on the same lateral wall, said recess matching the external profile of the cutting knife 3.

It is preferable that the tooth 5 have a bevelled profile so as to prevent possible breakage within the recess 6 during use of the cutting knife 3 and to allow the same knife small room for adjustment while it is being clamped into the seat; furthermore the recess itself has an angle of opening of 90°.

Again in Figure 2 the wedge 4 has a tapered profile with a angle Ω less than the angle of opening Ω 1 of the seat 2: the small difference between these angles (about one degree) allows, after movement of the wedge towards the outside of the shaft due to centrifugal force F generated by the angular velocity of the shaft 1, the cutting knife 3 to be clamped into its working position when the cylindrical shaft 1 starts rotating on its own axis and the upper part of the knife 3 to be pressed against the end portion 8a of the recess 8, where the action of the thrust of the workpiece on the operating cutting edge is most concentrated.

The wedge 4 has furthermore, on the side facing the lateral wall 2a, a longitudinal recess 7 which, when the shaft 1 is rotating (that is to say when the knife 3 is already clamped into place), eliminates contact between the wedge 4 and the more internal part of the cutting knife 3 where it has its second cutting edge 3b, not in use and which therefore must not be touched in order to prevent it from being blunted. In the example shown in Figure 2 there are two recesses 7 made on the wedge 4, parallel to each other and located one on each side of the wedge itself. This symmetry regarding the wedge 4 means this latter can be used both with the end 15a of the removal seat 4a in contact with the knife 3 (as shown in Figure 2), and with the opposite end 15b, whose end portion is bevelled and thus allows the distance (shown in Fig. 2 by L) between the working point of the knife 3 and the point of contact between the latter and the wedge 4 to be varied; such possible variation is useful, because it allows the same planing tool to carry out more than one sort of woodworking operation.

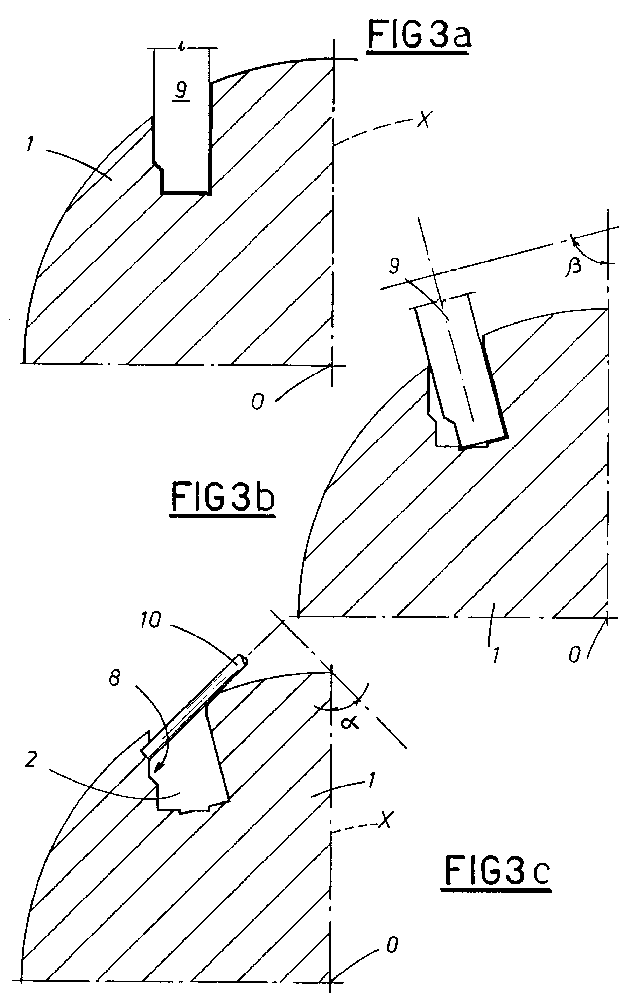

With reference to the Figures 3a, 3b and 3c the planing tool concerned in this invention can be made starting from a cylindrical solid shaft 1 in three distinct operations, which will be described below, which produce a single seat 2. These operations or passes are carried out using two single tools (for example mills), shown in Figures 3a, 3b and 3c by 9 and 10.

The first longitudinal pass is carried out using the first tool 9 (see Fig.3a), which is off-centre with respect to the x axis of the cylindrical shaft 1 and shaped so as to make the said recess 8.

The second longitudinal pass is carried out by the first tool 9 (see Fig. 3b), which is at an angle ß with respect to the x axis of the shaft 1 and is positioned in such a way that the shaped part skims the end portion 8a of the recess 8.

The third pass is carried out by the second tool 10 (see Fig. 3c), which is at an angle α with respect to the x axis of the shaft and produces the said recess 6. This second tool also produces the bevel on the external surface of the cylindrical shaft 1, said bevel being, practically, on the wall opposite the one bearing the recess 8.

Comparing the Figures 3a, 3b and 3c it will be noted that with the first pass the lateral wall 2a and relative recess 8 of the seats 2 are produced, with the second pass the opposite wall 2a is produced while the third pass produces the recess 6 on the lateral wall 2a.

Using a planing tool made in this manner it is possible for the operator perfectly to align the knives on the shaft and to clamp them into place rapidly and easily without having to adjust screw or other similar means. Furthermore the engaging between the wedge and the knife due to centrifugal force prevents chips from intruding into the inside of the recess which could otherwise alter the positioning of the knife with respect to the shaft and harm the operator when he or she is changing the knife.

The invention thus conceived may undergo numerous modifications and variants, all of which are included within the scope of the appendant claims. Furthermore, all details can be substituted by technically equivalent elements.

## Claims

1. Dynamically clamped planing tool comprising essentially a one-piece cylindrical shaft (1), rotating on its own longitudinal axis (0) and having a series of peripheral longitudinal seats (2), tapered towards the outside and designed, each one, to house corresponding cutting knives (3), positioned in contact with a lateral wall (2a) of the said seat (2), and corresponding wedges (4) for clamping the said knives inside the seats themselves, the said wedges (4) having, each on the end facing towards the outside of the said cylindrical shaft (1), a longitudinal seat (4a) for chip removal, wherein there are the said cutting knives (3) each of which has a longitudinal tooth (5), which engages with a corresponding recess (6) on the said lateral wall (2a) of the said seat (2) and designed to allow the positioning of the said cutting knife (3) inside the said seat (2) and the centering of the same with respect to the said shaft (1) and wherein the said wedge (4) has a tapered profile with an angle which is less than the angle of opening of the seat (2) so as to clamp the said cutting knife (3), in a working position, at least on the extreme portion of the said lateral wall (2a), under the action of a force (F) directed towards the outside of the said shaft (1) and due to the rotation of the latter.

2. Planing tool according to claim 1, wherein the said tooth (5) is located centrally on the said cutting knife (3) and has a bevelled profile, the said knife (3) being provided with a pair of cutting edges (3a and 3b) which are reversible.

3. Planing tool according to claim 1, wherein the said wedge (4) has at least on the side facing the said knife and on the end placed within the said seat (2) a longitudinal recess (7) designed to prevent contact between the same wedge and the inner end of the said cutting knife (3).

4. Planing tool according to claim 1, wherein the said recess (6) housing the said tooth (5) has an angle of opening of 90°.

5. Planing tool according to claim 1, wherein the said lateral wall (2a) of the said seat (2) has a recess (8) which reproduces the external profile of the said cutting knife.

6. Procedure for making dynamically clamped planing tools according to claims 1 to 5, starting with a cylindrical element or shaft (1) which envisages using two machining tools (9 and 10), wherein said procedure consists essentially of the following operations in succession for the making of one of the said seats (2):
a) a first longitudinal pass, off-centre with respect to the (x) axis of the said shaft (1), and with the first of the said tools (9) shaped so as to make the said recess (8) which copies the external profile of the said cutting knife (3);
b) a second pass with the same tool (9) at an angle (β) with respect to the (x) axis of the said shaft (1);
c) a third pass carried out by a second tool (10) at an angle (α) with respect to the (x) axis of the said shaft (1) and making the said recess (6).

## Patentansprüche

1. Dynamisch eingespanntes Hobelwerkzeug, bestehend im wesentlichen aus einer zylindrischen Welle (1) in einem Stück, die sich um ihre eigene Längsachse (0) dreht und umlaufend eine Reihe von Längssitzen (2) aufweist, die nach aussen hin verjüngt und dazu bestimmt sind, jeweils entsprechende Schneidmesser (3) aufzunehmen, welche im Kontakt mit einer Seitenwand (2a) des genannten Sitzes (2) angeordnet sind, sowie entsprechende Klemmkeile (4) zum Einspannen dergenannten Messer im Inneren der Sitze selbst, wobei die genannten Klemmkeile (4) jeweils an dem nach aussen der genannten zylindrischen Welle (1) zugewandten Ende einen Längssitz (4a) zum Entfernen von Spänen aufweisen, **dadurch gekennzeichnet,** dass die genannten Schneidmesser (3) jeweils einen längs angeordneten Zahn (5) aufweisen, der in eine entsprechende Vertiefung (6) in dergenannten Seitenwand (2a) des genannten Sitzes (2) greift und dazu dient, die Positionierung des genannten Schneidmessers (3) in dem genannten Sitz (2) und die Zentrierung desselben im Verhältnis zu der genannten Welle (1) zu ermöglichen, **und dadurch,** dass der genannte Klemmkeil (4) ein verjüngtes Profil mit einem Winkel aufweist, der geringer ist als der Winkel der Öffnung des Sitzes (2), so dass das genannte Schneidmesser (3) in einer Arbeitsposition wenigstens an dem äusseren Abschnitt der genannten Seitenwand (2a) eingespannt wird, und zwar unter der Wirkung einer Kraft (F), die nach ausserhalb der genannten Welle (1) gerichtet und auf die Umdrehung letzterer zurückzuführen ist.

2. Hobelwerkzeug nach Patentanspruch 1, **dadurch ge****kennzeichnet,** dass der genannte Zahn (5) in der Mitte des genannten Schneidmessers (3) angeordnet ist und ein abgeschrägtes Profil aufweist, wobei das genannte Schneidmesser (3) mit einem Paar von Schneidkanten (3a und 3b) versehen ist, die umdrehbar sind.

3. Hobelwerkzeug nach Patentanspruch 1, **dadurch ge****kennzeichnet,** dass der genannte Klemmkeil (4) wenigstens auf der dem genannten Messer zugewandten Seite und an dem im Inneren des genannten Sitzes (2) angeordneten Ende eine längliche Vertiefung (7) aufweist, die dazu bestimmt ist, den Kontakt zwischen dem Klemmkeil selbst und dem inneren Ende des genannten Schneidmessers (3) zu verhindern.

4. Hobelwerkzeug nach Patentanspruch 1, **dadurch ge****kennzeichnet,** dass die genannte, den genannten Zahn (5) aufnehmende Vertiefung (6) einen Öffnungswinkel von 90° hat.

5. Hobelwerkzeug nach Patentanspruch 1, **dadurch ge****kennzeichnet,** dass die genannte Seitenwand (2a) des genannten Sitzes (2) eine Vertiefung (8) aufweist, die dem äusseren Profil des genannten Schneidmessers entspricht.

6. Verfahren zur Herstellung eines dynamisch eingespannten Hobelwerkzeugs nach den Patentansprüchen von 1 bis 5, ausgehend von einem zylindrischen Element oder einer Welle (1), welche zur Verwendung von zwei Werkzeugen (9 und 10) vorgesehen ist, **dadurch gekennzeichnet,** dass das genannte Verfahren im wesentlichen aus der nachstehenden Folge von Arbeitsgängen besteht zur Herstellung eines dergenannten Sitze (2) besteht:
a) einem ersten Durchlauf, versetzt im Verhältnis zu der Achse (x) der genannten Welle (1) und mit dem ersten der genannten Werkzeuge (9) so geformt, dass die genannte Vertiefung (8) eingearbeitet wird, welche dem äusseren Profil des genannten Schneidmessers (3) entspricht;
b) einem zweiten Durchlauf mit dem gleichen Werkzeug (9) in einem Winkel (β) im Verhältnis zu der Achse (x) der genannten Welle (1);
c) einem dritten Durchlauf mit dem zweiten Werkzeug (10) in einem Winkel ( ) im Verhältnis zu der Achse (x) der genannten Welle (1), wobei die genannte Vertiefung (6) eingearbeitet wird.

## Revendications

1. Outil de rabotage à serrage dynamique comprenant essentiellement un arbre cylindrique (1) d'une seule pièce tournant autour de son axe longitudinal (O) et ayant une série de logements périphériques longitudinaux (2) effilés vers l'extérieur et chacun destiné à loger des lames tranchantes (3) correspondantes, disposées en contact avec une paroi latérale (2a) dudit logement (2), et des coins correspondants (4) pour bloquer lesdites lames à l'intérieur des logements, lesdits coins (4) ayant, chacun sur son extrémité tournée vers l'extérieur dudit arbre cylindrique (1), un siège longitudinal (4a) pour l'élimination des copeaux, caractérisé en ce que lesdites lames tranchantes (3) sont pourvues chacune d'une dent longitudinale (5) qui s'engage avec une cavité correspondante (6) prévue sur ladite paroi latérale (2a) du logement (2) et destinée à permettre la mise en place de ladite lame tranchante (3) dans ledit logement (2) et le centrage de cette lame par rapport à l'arbre (1) et en ce que ledit coin (4) a un profil effilé ayant un angle plus petit que l'angle d'ouverture du logement (2) de manière à serrer ladite lame tranchante (3) dans une position de travail, au moins à la portion extrême de ladite paroi latérale (2a), sous l'action d'une force (F) dirigée vers l'extérieur dudit arbre (1) et due à la rotation de ce dernier.

2. Outil de rabotage selon la revendication 1, caractérisé en ce que ladite dent (5) est située au centre sur ladite lame tranchante (3) et a un profil chanfreiné, ladite lame (3) étant pourvue de deux tranchants qui sont renversables.

3. Outil de rabotage selon la revendication 1, caractérisé en ce que ledit coin (4) a au moins sur son côté tourné vers ladite lame et sur l'extrémité disposée à l'intérieur dudit logement (2) un évidement longitudinal (7) destiné à empêcher le contact entre le même coin et l'extrémité intérieure de la lame tranchante (3).

4. Outil de rabotage selon la revendication 1, caractérisé en ce que ladite cavité (6) logeant la dent (5) a un angle d'ouverture de 90°.

5. Outil de rabotage selon la revendication 1, caractérisé en ce que ladite paroi latérale (2a) du logement (2) présente une cavité (8) qui reproduit le profil extérieur de ladite lame tranchante.

6. Procédé pour la fabrication d'outils de rabotage à serrage dynamique suivant les revendications 1 à 5, à partir d'un élément cylindrique ou arbre (1) prévoyant l'utilisation de deux outils de travail (9 et 10), caractérisé en ce qu'essentiellement il comporte consécutivement les opérations suivantes, pour la réalisation de l'un desdits logements (2):
a) une première passe longitudinale, désaxée par rapport à l'axe (x) dudit arbre (1), et avec le premier desdits outils (9) conformé de manière à former ladite cavité (8) épousant le profil extérieur de ladite lame tranchante (3);
(b) une deuxième passe avec le même outil (9) incliné d'un angle donné (β) par rapport à l'axe (x) dudit arbre (1);
c) une troisième passe exécutée par un deuxième outil (10) incliné d'un angle donné (α) par rapport à l'axe (x) dudit arbre (1) et formant ladite cavité (6).
